# EUROPEAN PATENT SPECIFICATION

(11) **EP 2 923 353 B1**
(45) Date of publication and mention of the grant of the patent: **31.10.2018**
(21) Application number: 12888876.5
(22) Date of filing: 28.12.2012
(51) Int. Cl.: G09G 3/32, G09G 3/20, G02F 1/13357, F21V 23/00, H05B 33/08

(54) **AUTOMATIC COLOR ADJUSTMENT ON LED VIDEO SCREEN**
AUTOMATISCHE FARBEINSTELLUNG LED AUF EINEM LED-VIDEOSCHIRM
RÉGLAGE AUTOMATIQUE DE COULEUR SUR UN ÉCRAN VIDÉO À DEL

(30) Priority: 21.11.2012 US 201213683774
(43) Date of publication of application: 30.09.2015
(73) Proprietor: Lighthouse Technologies Limited, Hong Kong (CN); Lighthouse Technologies (Huizhou) Ltd., Huizhou, Guangdong 516003 (CN)
(72) Inventor: KIKKAWA, Shinsaku, Sagamihara Kanagawa (JP); CHAN, Kui Lai Curie, Hong Kong (CN)
(74) Representative: Maiwald Patent- und Rechtsanwaltsgesellschaft mbH
(86) International application number: PCT/CN2012/087929
(87) International publication number: WO 2014/079131

(56) References cited:
- EP-A1- 1 879 172
- CN-A- 1 908 748
- CN-A- 101 105 913
- CN-A- 102 622 960
- JP-A- 2008 117 713
- US-A1- 2010 007 588

## Description

### BACKGROUND OF THE INVENTION

The present invention relates to lighting devices and methods. In particular, the present invention relates to a method and system for the automatic color adjustment of a video display screen, panel, module or other display component comprising light emitting diodes.

Today, it is common for video displays to use light-emitting diodes ("LEDs") because of the brightness and low power requirements of the LEDs. LED video screens are used as digital billboards to display e.g., advertisements, textual and/or graphical informational messages, and live or prerecorded videos throughout cities and towns and at sporting events, concerts, and other appropriate venues (e.g., inside or outside of buildings). LED video screens, also referred to as LED display walls, are made up of individual panels and/or intelligent modules (IM) having a predetermined number and arrangement of controllable LEDs. The panels and/or modules are mounted next to each other and their outputs are controlled such that they appear to be one large display screen.

Unfortunately, LEDs are known for decaying over time. This means that the LEDs will not be as bright and/or as colorful as they were prior to their first use. Thus, after monthly and yearly operation of an LED video screen, the LEDs on the panels, modules, etc. that make-up the screen will eventually decay, affecting the brightness and/or color of the screen. Depending upon how the LED video screen was being used and what it had been displaying, the decay level of the LEDs on the individual panels and modules may be different from panel to panel and module to module. That is, because some LEDs will be used more frequently than others depending upon e.g., their
location and what the screen was being used to display, uniformity of the screen (particularly with respect to it brightness and color output) will get worse over time.

Currently, there are techniques for adjusting the LED screen's color and brightness, but they are manually intensive. As used herein, the term "color adjustment" will refer to color and or brightness adjustment. Oftentimes a web camera, or other digital camera, is used with other equipment external to the LED screen to capture the screen's output. The external equipment includes, but is not limited to, light sensors and a computer that are separate from the screen's control panel. Moreover, a human operator is required to set up and control the equipment, determine test results, and execute the adjustment process. The external equipment and need for a human operator renders the typical automatic color adjustment technique costly, time consuming and inefficient.

Accordingly, there exists a need to provide an automatic color adjustment scheme for a video screen, display panel, module or other component comprising light emitting diodes.

Document EP 1 879 172 A1 relates to aging compensation for a display board comprising an array of light emitting elements, a driving means for driving the light emitting elements with image data, and an aging determination means. The aging determination means comprises one or more light emitting elements for emitting light representative of the light emitted by the light emitting elements of the display board, and at least one reference light emitting element which, during use of the display board, is not driven. For calibration, the reference light emitting element is driven with calibration data and the emitted light is measured as well as light representative of the light emitted by the light emitting elements of the display board. The difference between the light emitted by the reference light emitting element and the light representative of the light emitted by the light emitting elements is a measure for the degree of aging of the light emitting elements of the array.

Moreover, the United States Patent Application Publication US 2010/0007588 A1 shows a display comprising a plurality of LED modules in which the amount of decay for each module is determined separately so as to perform in each module an independent compensation due to the ageing of the LEDs.

### BRIEF SUMMARY OF THE INVENTION

In consideration of the above problems, in accordance with one aspect disclosed herein, a light emitting module is provided. The module comprises a plurality of display light emitters connected to a first side of a circuit board; a reference light emitter connected to a second side of the circuit board; and a first circuit for determining an amount of decay experienced by the plurality of display light emitters based on light emitted from the reference light emitter.

In another embodiment, a light emitting video screen is provided. The screen comprises a plurality of light emitting modules. Each light emitting module comprises a plurality of display light emitters connected to a first side of a circuit board; a reference light emitter connected to a second side of the circuit board; and a first circuit for determining an amount of decay experienced by the plurality of display light emitters based on light emitted from the reference light emitter.

In yet another embodiment a light emitting video system is provided. The video screen comprises a plurality of display light emitters and a plurality of reference light emitters; and a controller coupled to control the video screen and perform automatic adjustment of the plurality of display light emitters based on light output from the reference light emitters.

In a further embodiment, a method of performing automatic color correction of a light emitting video screen comprising a plurality of light emitting modules is provided. The method comprises for each module, inputting a current light level from a reference light emitter on the module; for each module, comparing the current light level to a reference level of the reference light emitter to an output level of the module; comparing the output levels of all of the light emitting modules to determine the lowest light level; and adjusting the light level of all of the modules such that all of the display light emitters have the determined smallest light level.

### BRIEF DESCRIPTION OF THE DRAWINGS

The figures are for illustration purposes only and are not necessarily drawn to scale. The invention itself, however, may best be understood by reference to the detailed description which follows when taken in conjunction with the accompanying drawings in which:
FIG. 1 shows a system for the automatic color adjustment of an LED display module constructed in accordance with the disclosed principles;
FIG. 2 shows an LED video screen comprised of a plurality of LED display modules illustrated in FIG. 1 during the automatic color adjustment process disclosed herein; and
FIG. 3 shows the LED video screen of FIG. 2 after the automatic color adjustment process disclosed herein.

### DETAILED DESCRIPTION OF THE INVENTION

In accordance with preferred embodiments disclosed herein, a system and method for performing automatic color adjustment on an LED video screen, display panel, module or other component is provided. The disclosed system and method periodically or constantly ensures the uniformity of the LED video screen, etc. automatically and without the need for human intervention. As such, the disclosed system and method is more efficient and less costly than today's manual color adjustment schemes.

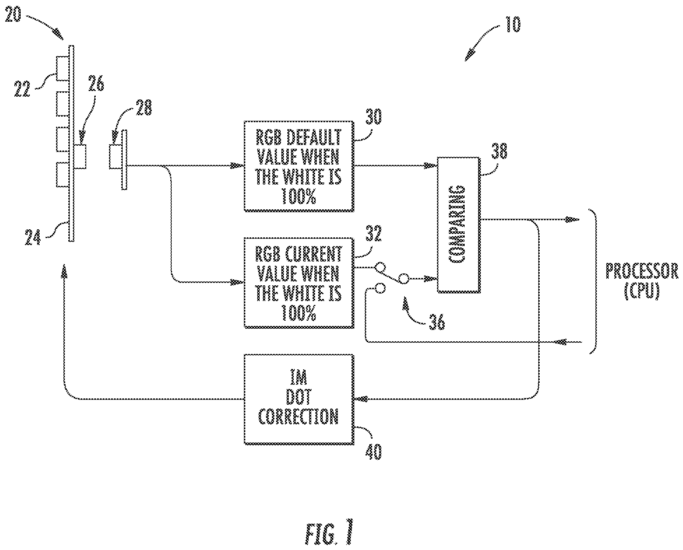

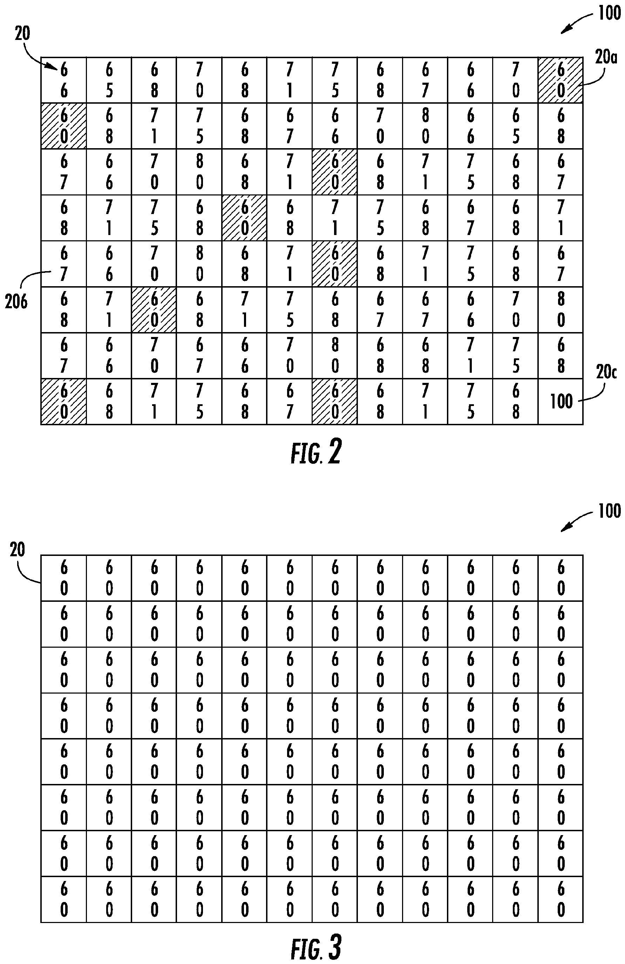

FIG. 1 illustrates a system 10 for the automatic color adjustment of an LED display intelligent module 20 constructed in accordance with the disclosed principles. In the illustrated embodiment, because LED video screens (e.g., LED video screen 100 illustrated in FIG. 2) are comprised of panels comprising a plurality of intelligent modules, the system 10 is designed to test the color/brightness at the intelligent module 20 level. This provides the best technique for ensuring the uniformity of the screen.

A shown in FIG. 1, each module 20 comprises a plurality of display LEDs 22 mounted to a circuit board 24. The modules 20 can comprise any number of display LEDs 22. In normal operation, a processor (or control panel) sends signals to the circuit board 24, which drives the LEDs 22 to emit light in the desired manner. As noted above, since LEDs 22 can decay over time, there is a need for a better mechanism for performing color adjustment for the module 20 and the overall screen. Thus, the disclosed system 10 uses a reference LED 26 mounted to a side of the circuit board 24 that is opposite the side where the display LEDs 22 are mounted. In the illustrated embodiment, the display LEDs 22 will be on a front side of the circuit board 24 where they will be visible to someone looking at the video screen and the reference LED 26 is mounted to the backside of the circuit board 24 where it will not be visible to someone looking at the screen. During normal operation of the module 20, the reference LED 26 will be driven in the same manner that the display LEDs 22 are driven. This way, the reference LED 26 experiences the same decay as the display LEDs 22.

Spaced apart from the reference LED 26 is a light sensor 28 that is also secured to the circuit board 24 (not shown) or other portion of the module 20. During the initial use of the module 20 (i.e., at the factory) and during the automatic adjustment process, the light sensor 28 will sense the output from the reference LED 26 and output a corresponding signal to the same processor or control panel that is used to drive the reference LEDs 22. It should be appreciated that there is no need for the light sensor 28 to sense the output of the reference LED 26 unless the output is needed for the automatic color adjustment process (described below).

The system 10 includes a first memory device 30 that stores the color/brightness information from the reference LED 26 (via the light sensor 28) upon the initial use of the module 20. This may occur at the factory where the module 20 was manufactured and initially set-up and tested. In a desired embodiment, the first memory device 30 will store the color/brightness information from the reference LED 26 (via the light sensor 28) upon the initial use of the module 20 in the LED video screen with its control panel. As will become apparent, the information stored in the first memory device 30 will be used as a reference level (i.e., 100% fully functional LED 26 without decay) throughout the automatic color adjustment process. The system 10 includes a second memory device 32 that stores the current color/brightness information from the reference LED 26 (via the light sensor 28) after the initial use of the module 20. The information in the second memory device 32 will be updated every time the automatic color adjustment process is executed to ensure that the current state of the reference LED 26 is captured.

The first memory device 30 is preferably a non-volatile memory device (e.g., a programmable ROM such as a serial programmable read only memory ("SPROM"), electrically erasable programmable read only memory ("EEPROM"), battery backed random access memory ("BRAM"), etc.) and preferably resides in the module 20. The second memory device 32 can be part of the first memory device 30 if the first memory device 30 is a programmable non-volatile memory (e.g., an EEPROM or BRAM). The second memory device 32 could be a separate memory device or hardware register, if desired. It should be appreciated that the second memory device 32 does not need to be a non-volatile memory device as its contents will be periodically changing. Moreover, the second memory device 32 is preferably contained within the module 20, but it should be appreciated that the second memory device 32 could reside within the screen's control panel as a separate memory or as part of a larger memory and can even be represented by a software table.

The information in the two memory devices 30, 32 will be compared (shown as a separate "comparing" component 38) and analyzed by the processor or control panel to determine any decay that the reference LED 26 is experiencing. Hereinafter, the term "control panel" will be used to refer to a processor, controller or control panel used to control the LED video screen and its individual modules 20. The comparing component 38 can be implemented in hardware or software and preferably resides on the module 20. It should be appreciated, however, that the comparing component 38 does not need to be a separate component from the control panel and that the present embodiment should not be limited as such. That is the function performed by the comparing component 38 can be implemented by the control panel, if desired. FIG. 1 also illustrates a switch 36 that connects the second memory device 32 to the comparing component 38 when the switch 36 is in a first position and connects the control panel to the comparing component 38 when the switch 36 is in a second position. The two connections of the switch 36 illustrate a first situation in which the information from the second memory device 32 is input by the comparing component 38, which then makes a comparison of the current output level of the reference LED 26 to the stored reference level of the reference LED 26 and a second situation in which the control panel outputs an adjustment level to the comparing component 38, which is then used by a dot correction component 40 to adjust the output level of the display LEDs 22 (discussed below).

The switch 36 is controlled by the control panel when it is time to perform the automatic adjustment process. Thus, all of the components of the system 10 that are necessary to perform the automation color adjustment are part of or reside within the module 20 such that they can be driven by the control panel, output results of the comparison, and implement the needed dot correction as directed by the control panel. It should be appreciated that the illustrated embodiment is not limited to this switching arrangement and that all of the comparing functions, analyzing of the compared signals and the implementation of the dot correction can be performed by the control panel, if desired.

FIG. 2 shows an LED video screen 100 comprised of a plurality of LED display modules 20 illustrated in FIG. 1. In the illustrated embodiment, the screen 100 is organized as an array of the modules 20. In a desired embodiment, the reference LED 26 of each module 20 included in the screen 100 is initially tested by being driven to 100% white color. Each sensor 28 senses the output of its associated reference LED 26 and outputs the value to the first memory device 30 contained within the module 20. This initial value is permanently stored and used subsequently as the reference value for the individual module 20. This test can be performed in the factory before or after the modules 20 are included as part of a display panel or the end product LED video screen 100. In one embodiment, this initial test and storage of the reference value is performed by the control panel used to control the screen 100 the first time the control panel activates the screen 100.

During normal operation of the video screen 100, each reference LED 26 is driven in the same manner as the display LEDs 22, this way the reference LEDs 26 experience the same decay as the display LEDs 22. When it is time to run the automatic adjustment process, the control panel drives the reference LEDs 26 with the 100% white color and switches the switches 36 such that the sensed outputs of the reference LEDs 26 (via the sensors 28) are sent to the associated comparing components 38. The outputs from the comparing components 38 are processed by the lone control panel used to control the screen 100, which determines the percentage each module 20 has decayed. The control panel subtracts the percentage of decay from 100% to determine each module's 20 current color/brightness percentage. The control panel then assigns the new color/brightness percentage to each module 20 in the screen 100.

FIG. 2 shows example color/brightness percentages that the control panel has assigned to the various modules 20 in the screen 10. For example, module 20a has a 60% color/brightness percentage, module 20b has a 67% color/brightness percentage while module 20c still has a 100% color/brightness percentage (i.e., it has experienced no decay). If left uncorrected, the color/brightness of the screen 100 would vary at each module 20, leaving it with a non-uniform color/brightness. The control panel, however, compares all of the color/brightness percentages to find the smallest value. In the FIG. 2 example, the smallest color/brightness percentage is the 60% associated with module 20a and the other shaded modules in the screen 100. The control panel will use the smallest value (i.e., 60%) as the color/brightness level for each module 20 such that the screen 100 will have a uniform color/brightness output.

The processor switches the switch 36 to the second position and outputs the uniform color/brightness level to the dot correction component 40 on each module 20 (via the comparing component 38). Each module 20 is then corrected by the dot correction component 40 such that all display LEDs 22 of each module 20 operate at the uniform color/brightness percentage. FIGS. 3 shows the LED video screen 100 of FIG. 2 after undergoing the automatic color adjustment process disclosed herein. As can be seen, all of the display LEDs 22 of each module 20 will operate at the color/brightness percentage of 60%. Thus, the screen 100 will now have a uniform display despite the fact that the display LEDS 22 of the various modules 20 making up the screen 100 have different levels of decay.

It should be appreciated that the control panel could perform the automatic color adjustment process periodically at any desired rate. A timer or other mechanism on the control panel could be used so that uniformity can be kept automatically. By having all of the system 10 within the individual modules 20, no human intervention or external equipment is required to implement the disclosed automatic color adjustment scheme except for the same control panel that id used to operate the screen 100. As such, the system and method disclosed herein is more efficient and cost effective than traditional adjustment processes.

## Claims

1. A light emitting video system (10) comprising:
a plurality of light emitting modules (20) each comprising:
a plurality of light emitting diodes (22) connected to a first side of a circuit board (24);
a reference light emitting diode (26) connected to a second side of the circuit board (24) and configured to be driven in the same manner as said plurality of light emitting diodes (22) so as to generate a first light at a first time and to generate a second light at a second time, which is indicative of the same decay of said light emitting diodes (22); the light emitting video system (10) further comprises
a comparing component (38) configured to:
receive a first light level corresponding to the first light emitted from the reference light emitting diode (26) and receive a second light level corresponding to the second light emitted from the reference light emitting diode (26);
compare the first light level and second light level; and
generate an output signal based on the comparison of the first light level and the second light level; and
a correction component (40) configured to adjust a characteristic of the plurality of light emitting diodes (22) based on a single adjustment level; and
a first circuit comprising a controller, the controller being configured to:
for each light emitting module (20), determine an amount of decay experienced by the plurality of light emitting diodes (22) of that light emitting module (20) based on the output signal generated by the comparing component (38) of that light emitting module (20);
compare the determined amounts of decay of the plurality of light emitting modules (20) to determine the light emitting module (20) having the lowest light level among the plurality of light emitting modules (20);
determine the single adjustment level for all of the light emitting modules (20), the single adjustment level being indicative of the determined lowest light level; and
provide the single adjustment level via the comparing components (38) of the light emitting modules (20) to the correction components (40) of the respective light emitting modules (20) to adjust a current light level of each light emitting module (20) such that each light emitting module (20) has the determined lowest light level.

2. The system (10) of claim 1, wherein the characteristic is:
- a color level of the light emitting diodes (22); or
- a brightness level of the light emitting diodes (22),

3. The system (10) of claim 1, wherein each of the plurality of light emitting modules (20) further comprises:
a light sensor (28) configured to:
sense the first light emitted by the reference light emitting diode (26) of that light emitting module (20) at the first time and the second light emitted by the reference light emitting diode (26) at the second time,
generate a first output signal indicative of the first light level, and
generate a second output signal indicative of the second light level;
a first memory device (30) connected to the light sensor (28) and configured to:
receive the first output signal, and
store the first light level; and
a second memory device (32) connected to the light sensor (28) and configured to:
receive the second output signal, and
store the second light level, wherein the comparing component (38) of that light emitting module (20) is configured to receive the first light level from the first memory device (30) and the second light level from the second memory device (32).

4. The system (10) of claim 3, wherein for each light emitting module (20), the first light level and the second light level are respectively indicative of:
- an initial color level and a current color level of the light emitted from the reference light emitting diode (26) of that light emitting module (20), wherein the correction component (40) of that light emitting module (20) is configured to adjust a color level of the plurality of light emitting diodes (22) of that light emitting module (20) based on the single adjustment level; or
- an initial brightness level and a current brightness level of the light emitted from the reference light emitting diode (26) of that light emitting module (20), wherein the correction component (40) of that light emitting module (20) is configured to adjust a brightness level of the plurality of light emitting diodes (22) of that light emitting module (20) based on the single adjustment level.

5. A light emitting video screen (100) comprising the system according to one of the preceding claims.

6. The system (10) of claim 1, further comprising:
a video screen (100) comprising the plurality of light emitting modules (20) according to claim 3.

7. The system (10) of claim 6, wherein each of the light emitting modules (20) further comprises:
a switching component (36) configured to connect an output of the second memory device (32) of that light emitting module (20) to an input of the comparing component (38) of that light emitting module (20) in a first position and connect the input of the comparing component (38) to the first circuit in a second position.

8. A method of performing automatic color correction of a light emitting video screen (100) comprising a plurality of light emitting modules (20), each comprising a plurality of light emitting diodes (22) connected to a first side of circuit board (24), said method comprising:
for each light emitting module (20), receiving a current light level from a reference light emitting diode (26) connected to a second side of the circuit board (24) on the module (20);
for each light emitting module (20), comparing, using a comparing component (38), the current light level to a reference level of the reference light emitting diode (26) to generate an output level of the corresponding light emitting module (20), which is indicative of an amount of decay experienced by the plurality of light emitting diodes (22) of that light emitting module (20);
comparing, using a controller, each of the output levels of the plurality of light emitting modules (20) to determine a lowest light level;
for each light emitting module (20), providing a single adjustment level indicative of the lowest light level from the controller to a correction component (40) of that light emitting module (20) via the comparing component (38) of that light emitting module (20); and
for each light emitting module (20), adjusting, using the correction component (40) of that light emitting module (20), the current light level of that light emitting module (20) based on the single adjustment level, such that the light emitting diodes (22) of that light emitting module (20) have the determined lowest light level.

9. The method of claim 8, wherein the reference light level for each light emitting module (20) is obtained at the initial operation of the corresponding light emitting module (20), the reference light level being stored in a first memory (30) on the corresponding light emitting module (20).

10. The method of claim 9, wherein the current light level for each light emitting module (20) is obtained after the corresponding light emitting module (20) has been operating as part of the screen (100), the current light level being stored in a second memory (32) on the corresponding light emitting module (20).

11. The method of claim 8, wherein the method is repeated periodically to ensure the uniformity of the output level of the screen (100).

## Patentansprüche

1. Lichtemittierendes Videosystem (10), aufweisend:
eine Mehrzahl von lichtemittierenden Modulen (20), jeweils aufweisend:
eine Mehrzahl von Leuchtdioden (22), welche mit einer ersten Seite einer Leiterplatte (24) verbunden sind;
eine Referenz-Leuchtdiode (26), welche mit einer zweiten Seite der Leiterplatte (24) verbunden und dazu eingerichtet ist, auf die gleiche Weise wie die Mehrzahl von Leuchtdioden (22) angesteuert zu werden, um ein erstes Licht zu einem ersten Zeitpunkt und ein zweites Licht zu einem zweiten Zeitpunkt zu erzeugen, was indikativ für denselben Verfall wie der der Leuchtdioden (22) ist; wobei das lichtemittierende Videosystem (10) ferner Folgendes aufweist
eine Vergleichskomponente (38), welche dazu eingerichtet ist:
einen ersten Lichtpegel zu empfangen, welcher mit dem ersten von der Referenz-Leuchtdiode (26) emittierten Licht korrespondiert, und einen zweiten Lichtpegel zu empfangen, welcher mit dem zweiten von der Referenz-Leuchtdiode (26) emittierten Licht korrespondiert;
den ersten Lichtpegel und den zweiten Lichtpegel zu vergleichen; und
ein Ausgangssignal zu erzeugen, welches auf dem Vergleich des ersten Lichtpegels und des zweiten Lichtpegels basiert; und
eine Korrekturkomponente (40), welche dazu eingerichtet ist, eine Charakteristik der Mehrzahl von Leuchtdioden (22) basierend auf einem einzigen Einstellpegel einzustellen; und
eine erste Schaltung, welche eine Steuereinheit aufweist, wobei die Steuereinheit dazu eingerichtet ist:
für jedes lichtemittierende Modul (20), basierend auf den von der Vergleichskomponente (38) dieses lichtemittierenden Moduls (20) erzeugten Ausgangssignals, einen Verfallwert zu bestimmen, welcher von der Mehrzahl von lichtemittierenden Dioden (22) dieses lichtemittierenden Moduls (20) erfahren wird;
die bestimmten Verfallwerte der Mehrzahl von lichtemittierenden Modulen (20) zu vergleichen, um das lichtemittierende Modul (20) mit dem niedrigsten Lichtpegel unter der Mehrzahl von lichtemittierenden Modulen (20) zu bestimmen;
für alle lichtemittierenden Module (20) den einzigen Einstellpegel zu bestimmen, wobei der einzige Einstellpegel für den niedrigsten bestimmten Lichtpegel indikativ ist; und
den einzigen Einstellpegel, über die Vergleichskomponenten (38) der lichtemittierenden Module (20), den Korrekturkomponenten (40) der jeweiligen lichtemittierenden Module (20) bereitzustellen, sodass jedes lichtemittierende Modul (20) den niedrigsten bestimmten Lichtpegel aufweist.

2. System (10) nach Anspruch 1, wobei die Charakteristik:
- ein Farbpegel der Leuchtdioden (22) ist; oder
- ein Helligkeitspegel der Leuchtdioden (22) ist.

3. System (10) nach Anspruch 1, wobei jedes der Mehrzahl von lichtemittierenden Modulen (20) ferner aufweist:
einen Lichtsensor (28), welcher dazu eingerichtet ist:
das erste von der Referenz-Leuchtdiode (26) dieses lichtemittierenden Moduls (20) an dem ersten Zeitpunkt emittierte Licht zu detektieren und das zweite von der Referenz-Leuchtdiode (26) an dem zweiten Zeitpunkt emittierte Licht zu detektieren,
ein erstes Ausgangssignal zu erzeugen, welches für den ersten Lichtpegel indikativ ist, und
ein zweites Ausgangssignal zu erzeugen, welches für den zweiten Lichtpegel indikativ ist;
eine erste Speichervorrichtung (30), welche mit dem Lichtsensor (28) verbunden ist und dazu eingerichtet ist:
das erste Ausgangssignal zu empfangen, und
den ersten Lichtpegel zu speichern; und
eine zweite Speichervorrichtung (32), die mit dem Lichtsensor (28) verbunden ist und dazu eingerichtet ist:
das zweite Ausgangssignal zu empfangen, und
den zweiten Lichtpegel zu speichern, wobei die Vergleichskomponente (38) dieses lichtemittierenden Moduls (20) dazu eingerichtet ist, den ersten Lichtpegel von der ersten Speichervorrichtung (30) und den zweiten Lichtpegel von der zweiten Speichervorrichtung (32) zu empfangen.

4. System (10) nach Anspruch 3, wobei für jedes lichtemittierende Modul (20) der erste Lichtpegel und der zweite Lichtpegel jeweils indikativ ist für:
- einen anfänglichen Farbpegel und einen aktuellen Farbpegel des von der Referenz-Leuchtdiode (26) dieses lichtemittierenden Moduls (20) emittierten Lichts, wobei die Korrekturkomponente (40) dieses lichtemittierenden Moduls (20) dazu eingerichtet ist, einen Farbpegel der Mehrzahl von lichtemittierenden Dioden (22) dieses lichtemittierenden Moduls (20) basierend auf dem einzigen Einstellpegel einzustellen; oder
- einen anfänglichen Helligkeitspegel und einen aktuellen Helligkeitspegel des von der Referenz-Leuchtdiode (26) dieses lichtemittierenden Moduls (20) emittierten Lichts, wobei die Korrekturkomponente (40) dieses lichtemittierenden Moduls (20) dazu eingerichtet ist, einen Helligkeitspegel der Mehrzahl von lichtemittierenden Dioden (22) dieses lichtemittierenden Moduls (20) basierend auf dem einzigen Einstellpegel einzustellen.

5. Lichtemittierender Videobildschirm (100), welcher das System gemäß einem der vorhergehenden Ansprüche aufweist.

6. System (10) nach Anspruch 1, ferner aufweisend:
einen Videobildschirm (100), welcher die Mehrzahl von lichtemittierenden Modulen (20) nach Anspruch 3 aufweist.

7. System (10) nach Anspruch 6, wobei jedes der lichtemittierenden Module (20) ferner aufweist:
eine Schaltkomponente (36), welche dazu eingerichtet ist, in einer ersten Position einen Ausgang der zweiten Speichervorrichtung (32) dieses lichtemittierenden Moduls (20) mit einem Eingang der Vergleichskomponente (38) dieses lichtemittierenden Moduls (20) zu verbinden und in einer zweiten Position den Eingang der Vergleichskomponente (38) mit der ersten Schaltung zu verbinden.

8. Verfahren zur Durchführung einer automatischen Farbkorrektur eines lichtemittierenden Videobildschirms (100), welcher eine Mehrzahl von lichtemittierenden Modulen (20) aufweist, welche jeweils eine Mehrzahl von lichtemittierenden Dioden (22) aufweisen, die mit einer ersten Seite einer Leiterplatte verbunden sind, wobei das Verfahren aufweist:
für jedes lichtemittierende Modul (20), Empfangen eines aktuellen Lichtpegels von einer Referenz-Leuchtdiode (26), die mit einer zweiten Seite der Leiterplatte (24) auf dem Modul (20) verbunden ist;
für jedes lichtemittierende Modul (20), Vergleichen, mittels einer Vergleichskomponente (38), des aktuellen Lichtpegels mit einem Referenzpegel der Referenz-Leuchtdiode (26), um einen Ausgangspegel des entsprechenden lichtemittierenden Moduls (20) zu erzeugen, welcher indikativ für einen Verfallswert ist, der von der Mehrzahl von lichtemittierenden Dioden (22) dieses lichtemittierenden Moduls (20) erfahren wird;
Vergleichen, mittels einer Steuereinheit, jedes Ausgangspegels der Mehrzahl von lichtemittierenden Modulen (20), um einen niedrigsten Lichtpegel zu bestimmen;
für jedes lichtemittierende Modul (20), Bereitstellen, von der Steuereinheit über die Vergleichskomponente (38) dieses lichtemittierenden Moduls (20) an eine Korrekturkomponente (40) dieses lichtemittierenden Moduls (20), eines einzigen Einstellpegels, welcher für den niedrigsten Lichtpegel indikativ ist; und
für jedes lichtemittierende Modul (20), Einstellen, mittels der Korrekturkomponente (40) dieses lichtemittierenden Moduls (20), des aktuellen Lichtpegels dieses lichtemittierenden Moduls (20) basierend auf dem einzigen Einstellpegel, sodass die lichtemittierenden Dioden (22) dieses lichtemittierenden Moduls (20) den bestimmten niedrigsten Lichtpegel aufweisen.

9. Verfahren nach Anspruch 8, wobei der Referenzlichtpegel für jedes lichtemittierende Modul (20) bei der Inbetriebnahme des entsprechenden lichtemittierenden Moduls (20) erhalten wird, wobei der Referenzlichtpegel in einem ersten Speicher (30) auf dem entsprechenden lichtemittierenden Modul (20) gespeichert wird.

10. Verfahren nach Anspruch 9, wobei der aktuelle Lichtpegel für jedes lichtemittierende Modul (20) erhalten wird, nachdem das entsprechende lichtemittierende Modul (20) als Teil eines Bildschirms (100) betrieben wurde, wobei der aktuelle Lichtpegel in einem zweiten Speicher (32) auf dem entsprechenden lichtemittierenden Modul (20) gespeichert wird.

11. Verfahren nach Anspruch 8, wobei das Verfahren periodisch wiederholt wird, um die Gleichmäßigkeit des Ausgangspegels des Bildschirms (100) sicherzustellen.

## Revendications

1. Un système vidéo émettant de la lumière (10) comprenant :
une pluralité de modules (20) d'émission de lumière comprenant chacun :
une pluralité de diodes électroluminescentes (22) connectées à un premier côté d'une carte à circuit (24) ;
une diode électroluminescente de référence (26) connectée à un deuxième côté de la carte à circuit (24) et configurée pour être commandée de la même manière que ladite pluralité de diodes électroluminescentes (22) de manière à générer une première lumière à un premier moment et pour générer une deuxième lumière à un deuxième moment, ce qui est indicatif de la même détérioration desdites diodes électroluminescentes (22) ; le système vidéo émettant de la lumière (10) comprend en outre un composant de comparaison (38) configuré pour :
recevoir un premier niveau de lumière correspondant à la première lumière émise par la diode électroluminescente de référence (26) et recevoir un deuxième niveau de lumière correspondant à la deuxième lumière émise par la diode électroluminescente de référence (26) ;
comparer le premier niveau de lumière et le deuxième niveau de lumière, et
générer un signal de sortie en fonction de la comparaison du premier niveau de lumière et du deuxième niveau de lumière ; et
un composant de correction (40) configuré pour régler une caractéristique de la pluralité de diodes électroluminescentes (22) sur la base d'un niveau de réglage unique ; et
un premier circuit comprenant un contrôleur, le contrôleur étant configuré pour :
pour chaque module (20) d'émission de lumière, déterminer le degré de dégradation subi par la pluralité de diodes électroluminescentes (22) de ce module (20) d'émission de lumière en fonction du signal de sortie généré par le composant de comparaison (38) de ce module (20) d'émission de lumière ;
comparer les degrés déterminés de dégradation de la pluralité de modules (20) d'émission de lumière pour déterminer le module (20) d'émission de lumière ayant le niveau de lumière le plus faible parmi la pluralité de modules (20) d'émission de lumière ;
déterminer le niveau de réglage unique pour tous les modules (20) d'émission de lumière, le niveau de réglage unique étant indicatif du niveau de lumière le plus faible déterminé ; et
fournir le niveau de réglage unique via les composants de comparaison (38) des modules (20) d'émission de lumière aux composants de correction (40) des modules d'émission de lumière respectifs (20) pour régler un niveau actuel de lumière de chaque module (20) d'émission de lumière de telle sorte que chaque module (20) d'émission de lumière ait le niveau de lumière le plus faible déterminé.

2. Le système (10) selon la revendication 1, dans lequel la caractéristique est :
- un niveau de couleur des diodes électroluminescentes (22) ; ou
- un niveau de luminosité des diodes électroluminescentes (22).

3. Le système (10) selon la revendication 1, dans lequel chacun de la pluralité de modules (20) d'émission de lumière comprend en outre :
un capteur de lumière (28) configuré pour :
détecter la première lumière émise par la diode électroluminescente de référence (26) de ce module (20) d'émission de lumière au premier moment et la deuxième lumière émise par la diode électroluminescente de référence (26) au deuxième moment,
générer un premier signal de sortie indicatif du premier niveau de lumière, et
générer un deuxième signal de sortie indicatif du deuxième niveau de lumière ;
un premier dispositif à mémoire (30) étant connecté au capteur de lumière (28) et configuré pour :
recevoir le premier signal de sortie, et
mémoriser le premier niveau de lumière ; et
un deuxième dispositif à mémoire (32) connecté au capteur de lumière (28) et configuré pour :
recevoir le deuxième signal de sortie, et
mémoriser le deuxième niveau de lumière, le composant de comparaison (38) de ce module (20) d'émission de lumière étant configuré pour recevoir le premier niveau de lumière du premier dispositif à mémoire (30) et le deuxième niveau de lumière du deuxième dispositif à mémoire (32).

4. Le système (10) selon la revendication 3, dans lequel, pour chaque module (20) d'émission de lumière, le premier niveau de lumière et le deuxième niveau de lumière sont respectivement indicatifs :
- d'un niveau de couleur initial et un niveau de couleur actuel de la lumière émise par la diode électroluminescente de référence (26) de ce module (20) d'émission de lumière, le composant de correction (40) de ce module (20) d'émission de lumière étant configuré pour régler un niveau de couleur de la pluralité de diodes électroluminescentes (22) de ce module (20) d'émission de lumière en fonction du niveau de réglage unique ; ou
- d'un niveau de luminosité initial et un niveau de luminosité actuel de la lumière émise par la diode électroluminescente de référence (26) de ce module (20) d'émission de lumière, le composant de correction (40) étant configuré pour régler un niveau de luminosité de la pluralité de diodes électroluminescentes (22) de ce module (20) d'émission de lumière sur en fonction du niveau de réglage unique.

5. Un écran vidéo émetteur de lumière (100) comprenant le système selon l'une des revendications précédentes.

6. Le système (10) selon la revendication 1, comprenant en outre :
un écran vidéo (100) comprenant la pluralité de modules (20) d'émission de lumière selon la revendication 3.

7. Le système (10) selon la revendication 6, dans lequel chacun des modules (20) d'émission de lumière comprend en outre :
un composant de commutation (36) configuré pour connecter une sortie du deuxième dispositif à mémoire (32) de ce module (20) d'émission de lumière à une entrée du composant de comparaison (38) de ce module (20) d'émission de lumière dans une première position et pour connecter l'entrée de l'élément de comparaison (38) au premier circuit dans une deuxième position.

8. Un procédé de correction automatique de la couleur d'un écran vidéo (100) émettant de la lumière comprenant une pluralité de modules (20) d'émission de lumière comprenant chacun une pluralité de diodes électroluminescentes (22) connectées à un premier côté d'une carte à circuit (24), ledit procédé comprenant :
pour chaque module (20) d'émission de lumière, le fait de recevoir un niveau de lumière actuel provenant d'une diode électroluminescente de référence (26) connectée à un deuxième côté de la carte à circuit (24) sur le module (20) ;
pour chaque module (20) d'émission de lumière, le fait de comparer, en utilisant un composant de comparaison (38), le niveau de lumière actuel à un niveau de référence de la diode électroluminescente de référence (26) pour générer un niveau de sortie du module (20) d'émission de lumière correspondant, qui est indicatif d'un degré de dégradation subie par la pluralité de diodes électroluminescentes (22) de ce module (20) d'émission de lumière ;
le fait de comparer, en utilisant un contrôleur, chacun des niveaux de sortie de la pluralité de modules (20) d'émission de lumière pour déterminer un niveau de lumière le plus faible ;
pour chaque module (20) d'émission de lumière, le fait de fournir un niveau de réglage unique indiquant le niveau de lumière le plus faible provenant du contrôleur à un composant de correction (40) dudit module (20) d'émission de lumière via le composant de comparaison (38) de ce module (20) d'émission de lumière ; et
pour chaque module (20) d'émission de lumière, le fait de régler, en utilisant le composant de correction (40) de ce module (20) d'émission de lumière, le niveau de lumière actuel de ce module (20) d'émission de lumière sur la base du niveau de réglage unique, de telle sorte que les diodes électroluminescentes (22) de ce module (20) d'émission de lumière aient le niveau de lumière le plus faible déterminé.

9. Le procédé selon la revendication 8, dans lequel le niveau de lumière de référence pour chaque module (20) d'émission de lumière est obtenu lors du fonctionnement initial du module (20) d'émission de lumière correspondant, le niveau de lumière de référence étant mémorisé dans une première mémoire (30) sur le module (20) d'émission de lumière correspondant.

10. Le procédé selon la revendication 9, dans lequel le niveau de lumière actuel pour chaque module (20) d'émission de lumière est obtenu après que le module (20) d'émission de lumière correspondant ait fonctionné en tant que partie de l'écran (100), le niveau de lumière actuel étant mémorisé dans une deuxième mémoire (32) sur le module (20) d'émission de lumière correspondant.

11. Le procédé selon la revendication 8, dans lequel le procédé est répété périodiquement pour assurer l'uniformité du niveau de sortie de l'écran (100).
